# EUROPÄISCHE PATENTANMELDUNG

(11) **EP 0 704 693 A1**
(43) Veröffentlichungstag der Anmeldung: **03.04.1996**
(21) Anmeldenummer: 95114630.7
(22) Anmeldetag: 18.09.1995
(51) Int. Cl.: G01N 21/88

(54) **Verfahren und Vorrichtung zur vollständigen optischen Qualitätskontrolle von Gegenständen**

(30) Priorität: 27.09.1994 DE 4434474
(71) Anmelder: Basler GmbH, D-22926 Ahrensburg (DE)
(72) Erfinder: Klicker, Jürgen, Dr., D-22955 Hoisdorf (DE)
(74) Vertreter: Jaeschke, Rainer

(57) **Zusammenfassung**

Die Erfindung betrifft ein Verfahren und eine Vorrichtung zur Qualitätskontrolle eines Gegenstandes (10), der wenigstens eine lichtdurchlässige Schicht (18) aufweist. Bei dem Verfahren und der Vorrichtung wird wenigstens ein Lichtstrahl (41) einer Lichtquelle (42) in einem Winkel (α) auf den Gegenstand (10) aufgebracht und von wenigstens einem lichtempfindlichen Empfänger (53) aufgenommen. Gemäß der Erfindung wird vorgeschlagen, daß der von dem Gegenstand kommende Lichtstrahl (48) vor dem Eintritt in den ersten lichtempfindlichen Empfänger (53) aufgeteilt wird, und ein Teil des Lichtstrahls in Richtung auf einen zweiten lichtempfindlichen Empfänger (62) abgelenkt wird. Dadurch können zwei verschiedene lichtempfindliche Empfänger (53, 62) gleichzeitig belichtet werden, um unterschiedliche Fehler eines Gegenstandes (10) anzuzeigen.

## Beschreibung

Die Erfindung betrifft ein Verfahren und eine Vorrichtung zur Qualitätskontrolle eines Gegenstandes, der wenigstens eine lichtdurchlässige Schicht aufweist, bei welchem Verfahren beziehungsweise welcher Vorrichtung wenigstens ein Lichtstrahl einer Lichtquelle in einem Winkel auf den Gegenstand aufgebracht und der von dem Gegenstand kommende Lichtstrahl von wenigstens einem lichtempfindlichen Empfänger aufgenommen wird. Grundsätzlich kann der Lichtstrahl an einer hinter der lichtdurchlässigen Schicht angeordneten verspiegelten Schicht des Gegenstandes reflektiert werden oder durch diesen hindurchtreten, so daß von dem lichtempfindlichen Empfänger entweder der reflektierte oder der hindurchgehende Lichtstrahl aufgenommen wird. Im folgenden wird der Einfachheit halber lediglich von einem an dem Gegenstand reflektierten oder hindurchgehenden oder von einem von dem Gegenstand kommenden Lichtstrahl gesprochen. Die Erfindung bezieht sich insbesondere auf die optische Qualitätskontrolle einer Compact-Disc (CD), so daß im folgenden überwiegend von einer CD die Rede ist, ohne daß damit eine Beschränkung verbunden sein soll.

In letzter Zeit haben sich CD's immer mehr durchgesetzt, da sie zum einen bei der Verwendung im Hausgebrauch als Tonträger eine sehr hohe Klangqualität hervorbringen können. Zum anderen eignen sie sich wegen der hohen möglichen Datendichte auch für die Verwendung als reiner Datenträger in der Datenverarbeitung. Nicht zuletzt ist die immer weitere Verbreitung der CD's auch auf die relative Unempfindlichkeit gegen äußere Einwirkungen zurückzuführen. Dies führt schließlich dazu, daß es sich bei einer CD um ein ausgesprochenes Massenprodukt handelt, das jedoch hohen bis höchsten Qualitätsanforderungen genügen muß.

Es sind eine Vielzahl von Meßverfahren für die unterschiedlichsten Fehler, die bei der Herstellung einer CD auftreten können, bekannt. Aufgrund des physikalischen Aufbaus einer CD, nämlich einer lichtdurchlässigen Schicht und einer dahinter angeordneten verspiegelten Schicht, eignen sich insbesondere optische Meßverfahren und Meßvorrichtungen, die auch Gegenstand dieser Erfindung sind.

Zunächst wird im folgenden der Aufbau und die Herstellung einer CD und die möglichen Fehler, die auftreten können, beschrieben. Eine CD besteht aus einer kreisrunden Scheibe, die in ihrer Mitte ein Loch für die Zentrierung in einem Abspielgerät besitzt. Die Scheibe besteht, im Querschnitt von unten, d. h. von der Leseseite des Abspielgerätes her gesehen, nach oben, aus einer lichtdurchlässigen Kunststoffschicht, im allgemeinen aus Polycarbonat, in der bereits alle Informationen in Form von Vertiefungen (Pits) enthalten sind. Darauf ist eine metallische Schicht, in der Regel Aluminium, zum Verspiegeln der Oberfläche der Polycarbonatschicht angeordnet, damit die Informationen durch das optische Abtastsystem des Abspielgerätes gelesen werden können. Die sehr dünne metallische Schicht wird durch eine ebenfalls sehr dünne Lackschicht geschützt, die im allgemeinen durch UV-Licht ausgehärtet wird. Auf dieser Lackschicht können dann Beschriftungen oder dergleichen zur Kennzeichnung der CD vorhanden sein.

In radialer Richtung kann man bei einer CD mehrere koaxiale, kreisringförmige Bereiche vom Kernloch ausgehend nach außen unterscheiden. Unmittelbar am Kernloch befindet sich der Bereich, der zum Einspannen der CD in dem Abspielgerät dient. Daran schließt sich ein Bereich an, in dem der sogenannte Ident-Code eingeprägt ist, anhand dessen die CD eindeutig identifiziert werden kann. Anschließend folgt der Bereich, der zur eigentlichen Datenspeicherung dient. Falls die CD bis zu ihrer maximalen Speicherkapazität bespielt ist, endet der Bereich unmittelbar am äußeren Randbereich. Andernfalls ist zwischen dem Randbereich der CD und dem Datenbereich noch das sogenannte Lead-Out oder ein Spiegelband angeordnet.

Bei der Herstellung wird zunächst ein Rohling aus Polycarbonat im Druckgußverfahren hergestellt, wobei durch die Matrize bereits alle Informationen eingeprägt werden. Anschließend wird die eine Oberfläche des Rohlings mit der metallischen Spiegelschicht im Sputterverfahren versehen und mit der Lackschicht versiegelt. Um eine gleichförmige Verteilung der Aluminium- und der Lackschicht zu erhalten und um eine möglichst dünne Schicht zu erzielen, wird die CD bei diesen Vorgängen zentrifugiert. Anschließend erfolgt das Bedrucken der CD mit dem Label.

Es ist offensichtlich, daß aufgrund der hohen Datendichte auf der CD, die optisch gelesen wird, die verspiegelte Schicht und der lichtdurchlässige Polycarbonatkörper hinsichtlich ihrer optischen Eigenschaften einwandfrei sein müssen. Insbesondere im Datenbereich können bereits kleinste Fehler ausreichen, um das Ablesen teilweise erheblich zu stören, wodurch insbesondere bei der Verwendung in der Datenverarbeitung unakzeptable Abweichungen bewirkt werden können. Es ist daher zweckmäßig und erforderlich, in den Produktionsprozeß eine Qualitätskontrolle einzuführen, mit welcher die möglichen Fehler einer CD entdeckt werden und klassifiziert werden können, so daß eine anschließende Aussonderung der defekten CD's oder ein Eingriff in den Produktionsvorgang erfolgen kann.

Als Fehler können auftreten: Löcher in der Spiegelschicht, sogenannte Pinholes, die dadurch entstehen, daß vor dem Sputterprozeß ein Staubkorn oder dergleichen auf der Oberfläche vorhanden war, das während des Zentrifugierens der CD nach außen geschleudert wird und ein Stück der metallischen Oberfläche mitreißt. Alukratzer treten dann auf, wenn das Staubkorn auf seinem Weg nach außen noch auf der Oberfläche verbleibt und somit weitere Schäden in der metallischen Schicht verursacht. Unterhalb der Metallschicht können organische Rückstände, beispielsweise Ölflecken, zu Abtastfehlern führen. Falls der Polycarbonatrohling auf seiner zu beschichteten Oberfläche deformiert ist, entstehen sogenannte Pickel. Als schwarze Punkte werden Fremdkörpereinschlüsse in der Polycarbonatschicht bezeichnet. In der Polycarbonatschicht können auch Bläschen, Lufteinschlüsse oder dergleichen vorhanden sein. Ferner können auf der Unterseite der CD Lackspritzer oder durch mechanische Einwirkungen verursachte Kratzer zu Ablesefehlern oder Qualitätseinbußen führen.

Diese Fehler verursachen in Abhängigkeit von ihrer Größe stets optische Abweichungen, die durch die bekannten Prüfgeräte in der Regel erfaßt werden können. Für eine Klassifikation der Fehler ist es jedoch auch erforderlich, die Tiefe der jeweiligen Fehler festzustellen. Es sind daher Meßverfahren und Meßvorrichtungen erforderlich, die den Fehler dreidimensional erfassen können. In Abhängigkeit von der Datendichte ist es weiterhin erforderlich, das Prüfungsverfahren zumindest im Datenbereich mit einer hohen Prüfschärfe durchzuführen, d. h. daß eine Ortsauflösung in einem Bereich von 30 µm bis 50 µm erreicht werden muß. Außerhalb des Datenbereiches sind lediglich Fehler von Interesse, die die optische Erscheinung der CD beeinflussen. Hier würde eine geringere Prüfschärfe, beispielsweise mit einer Ortsauflösung des menschlichen Auges um etwa 200 µm, ausreichen.

Weiterhin können bei einer CD noch optische Verzerrungen durch eine beispielsweise konvexe oder konkave Verformung der CD erfolgen. Auch führen innere Spannungen in der Polycarbonatschicht zu Ablesefehlern, da Polycarbonat ein unter Spannung optisch aktives Material ist, so daß das Phänomen der Doppelbrechung auftritt. Dies hat zur Folge, daß das in der Regel polarisierte Licht des Abtastlasers des Abspielgerätes eine unerwünschte Änderung der Polarisaton aufgrund dieser akzidentiellen Doppelbrechung erhalten würde. Ferner führen auch Fehler in der Mikrostruktur der Polycarbonatschicht häufig zu Lesefehlern. Die Ursache dieser sogenannten Wolken liegt häufig in der Preßmatrize, so daß beim Auftreten einer Wolke davon ausgegangen werden muß, daß ein Systemfehler vorliegt.

Für die Erfassung der erstgenannten Fehlergruppe sind Meßverfahren und Meßvorrichtungen bekannt, bei welchen ein linienförmiger Lichtstrahl auf die Unterseite in einem spitzen Winkel aufgebracht wird, dort reflektiert und von einer sogenannten Zeilenkamera aufgenommen wird. Der Fehler erscheint in der Kamera als dunkler Fleck. Die CD wird während des Prüfvorgangs einmal gedreht, so daß die gesamte CD beleuchtet wird und auf eventuelle Fehler hin untersucht werden kann. Aufgrund der eindeutigen Geometrie und der vorgegeben Drehung der CD kann gleichzeitig auf die Tiefe eines Fehlers geschlossen werden, da während der Drehbewegung derselbe Fehler zweimal an der gleichen Stelle auftaucht, da er einmal im einfallenden Lichtstrahl und einmal im ausfallenden Lichtstrahl liegt. Das Erscheinungsbild einer Wolke kann jedoch mit den bisherigen Meßverfahren zur Zeit nicht zuverlässig erkannt werden.

Zum Nachweis von inneren Spannungen wird der Lichtstrahl hinter der Lichtquelle durch einen Polfilter linear polarisiert, während vor der Kamera ebenfalls ein linearer Polfilter angeordnet ist. In der Regel sind die Polfilter um 90° gegeneinander verdreht angeordnet. Die Kamera bleibt dann im Falle einer einwandfreien CD, also bei einer CD ohne innere Spannungen, vollkommen dunkel, da das polarisierte Licht beim Durchgang durch die Polycarbonatschicht nicht verändert worden ist. Ansonsten stellt die in der Kamera beobachtete Helligkeit ein Maß für die inneren Spannungen dar.

Verformungen einer CD werden dadurch ermittelt, daß ein punktförmiger Lichtstrahl, meistens aus einer Halbleiterlichtquelle, auf die Unterseite der CD aufgebracht wird und in Richtung auf eine positionsempfindliche Photodiode reflektiert wird. Derartige Photodioden können beispielsweise als Vier-Quadranten-Dioden ausgebildet sein. Im Falle einer ebenen CD wird der Lichtstrahl auf einen bestimmten Bereich der Photodiode reflektiert, während er bei einer beispielsweise konvexen oder konkaven CD abgelenkt und einen anderen Quadranten der Photodiode belichten würde. Das Ausmaß der Ablenkung kann hierbei als ein Ausmaß der Verformung herangezogen werden. Der Nachteil dieses Verfahrens ist darin zu sehen, daß die CD lediglich entlang eines Durchmessers geprüft wird. Hut- oder wulstförmige Verformungen können nicht erfaßt werden, sofern der Lichtstrahl auf die ansonsten ebene CD auftrifft.

Es ist offensichtlich, daß für eine vollständige Prüfung einer CD insgesamt drei Meßverfahren erforderlich sind. Dies ist zum einen zeitaufwendig und kann daher nicht ohne weiteres in einen Produktionsverlauf eingebaut werden. Ferner erfordern die drei dafür erforderlichen Prüfstände einen erhöhten maschinellen Aufwand. Weiterhin besteht ein Nachteil der bekannten Prüfverfahren darin, daß nicht alle Fehlerarten zuverlässig detektiert und erkannt werden können.

Der Erfindung liegt die Aufgabe zugrunde, ein Meßverfahren und eine Meßvorrichtung zu schaffen, mit welchen zumindest eine Vielzahl der bekannten Fehler in einem Schritt erkannt werden können.

Diese Aufgabe wird gemäß der Erfindung dadurch gelöst, daß der von dem Gegenstand kommende Lichtstrahl vor dem Eintritt in den lichtempfindlichen Empfänger aufgeteilt wird und ein Teil des Lichtstrahls in Richtung auf einen zweiten lichtempfindlichen Empfänger abgelenkt wird. Dies hat den Vorteil, daß zwei lichtempfindliche Empfänger von nur einem Lichtstrahl gleichzeitig belichtet werden können. Es können daher beispielsweise zwei unterschiedliche Kameratypen, die für die Anzeige nur der einen oder anderen Fehlerart besonders zweckmäßig wären, in einem Schritt des Verfahrens zur Qualitätskontrolle einer CD eingesetzt werden. Somit ist es möglich unterschiedliche Fehlerarten, die unterschiedliche lichtempfindliche Empfänger erfordern, gleichzeitig anzuzeigen.

An dieser Stelle wird darauf hingewiesen, daß lediglich zum besseren Verständnis von einer Anzeige eines Fehlers auf dem oder durch den lichtempfindlichen Empfänger geredet wird. Dies soll so zu verstehen sein, daß der Fehler von dem lichtempfindlichen Empfänger aufgenommen wird und auf einem entsprechenden Anzeigemittel, beispielsweise einem mit dem lichtempfindlichen Empfänger verbundenen Monitor, bildlich dargestellt wird.

In einer zweckmäßigen Ausführungsform ist vorgesehen, daß der von dem Gegenstand kommende Strahl durch einen Strahlteiler aufgeteilt wird, der zwischen dem ersten lichtempfindlichen Empfänger und dem Gegenstand angeordnet ist. Dadurch kann ein einfacher Aufbau der für die Qualitätskontrolle erforderlichen Vorrichtung erreicht werden.

In einer anderen Ausführungsform der Erfindung ist vorgesehen, daß der von dem Gegenstand kommende Lichtstrahl von einem teildurchlässigen Spiegel vor dem Eintritt in den ersten lichtempfindlichen Empfänger derart reflektiert wird, daß der dort reflektierte Lichtstrahl gegenläufig unter einem im wesentlichen gleichen Winkel wie der Einfallswinkel auf den Gegenstand auftrifft, dort reflektiert wird und durch einen zwischen dem Gegenstand und der Lichtquelle angeordneten Strahlteiler trifft, in welchem ein Teil in Richtung auf den zweiten lichtempfindlichen Empfänger abgelenkt wird. Diese Führung des Lichtstrahls hat den Vorteil, daß der Kontrast auf dem zweiten lichtempfindlichen Empfänger erhöht werden kann, da der Gegenstand, z. B. eine CD, bei gleicher, also bei einer unverdrehten Lage, sowohl von dem einfallenden als auch von dem durch den teildurchlässigen Spiegel reflektierten Lichtstrahl durchlaufen wird. Es können daher auch kontrastärmere Fehler, beispielsweise großflächige oder stochastische Fehler, die bei einem einmaligen Durchlauf des Lichtstrahls nur eine geringe Schwächung desselben bewirken, detektiert werden, da diese Fehler nunmehr den Lichtstrahl in seinem Verlauf zweimal abschwächen.

In einer anderen Ausführungsform der Erfindung ist vorgesehen, daß der Lichtstrahl hinter der Lichtquelle polarisiert wird. In einer weitergehenden Ausführungsform ist vorgesehen, daß wenigstens ein Wellenlängenbereich des Lichtstrahls hinter der Lichtquelle zirkular oder elliptisch polarisiert wird. Es hat sich in überraschender Weise gezeigt, daß durch zirkular oder elliptisch polarisiertes Licht die Fehler in der Mikrostruktur, die sogenannten Wolken, auf einem lichtempfindlichen Empfänger gut sichtbar sind und eindeutig klassifiziert werden können. Es ist daher möglich, diese Fehlererscheinungen auf einem der lichtempfindlichen Empfänger darzustellen. Eventuell schadhafte Matrizen können daher unmittelbar erkannt werden, so daß beispielsweise ein sofortiger Eingriff auf die laufende Produktion möglich ist, um das Ausmaß des Ausschusses gering zu halten.

Besonders vorteilhaft ist es, wenn aus dem Lichtstrahl vor dem Eintritt in wenigstens einen lichtempfindlichen Empfänger derjenige Anteil ausgefiltert wird, dessen Polarisationsart der Polarisationsart des gesendeten Lichts entspricht. Dadurch können in dem entsprechenden lichtempfindlichen Empfänger auch innere Spannungen angezeigt werden. Im einzelnen kann dabei so vorgegangen werden, daß im Falle eines linear polarisierten Lichtes vor dem entsprechenden lichtempfindlichen Empfänger ein lineares Polfilter angeordnet ist.

Falls das gesendete Licht zirkular oder elliptisch polarisiert ist, werden vor dem lichtempfindlichen Empfänger in Strahlrichtung sowohl eine Verzögerungsplatte, beispielsweise eine λ/4-Platte, als auch ein lineares Polfilter angeordnet. Die Verwendung von zirkular polarisiertem Licht hat den Vorteil, daß die durch die inneren Spannungen verursachte Doppelbrechung unabhängig von der Vorzugsrichtung gut erkannt werden können, die daher ggf. mit nur linear polarisiertem Licht nicht erfaßt werden könnten. Die Verzögerungsplatte vor dem lichtempfindlichen Empfänger weist dabei den gleichen Wellenlängenbereich wie die Verzögerungsplatte hinter der Lichtquelle auf, d. h., daß die beiden Verzögerungsplatten mit der gleichen Wellenlänge arbeiten. Die Verwendung von elliptisch polarisiertem Licht hat den Vorteil, daß Veränderungen der Polarisation, die durch die Reflexion an der verspiegelten Metallschicht entstehen, kompensiert werden können.

Zweckmäßig kann es weiterhin sein, daß die Polarisationseinrichtung vor dem entsprechenden lichtempfindlichen Empfänger so ausgerichtet ist, daß ein Lichtdurchgang dann stattfinden kann, wenn der geprüfte Gegenstand keine Doppelbrechung aufweist. Dadurch ist es möglich, daß in einem lichtempfindlichen Empfänger zwei Fehlerphänomene angezeigt werden können. So können beispielsweise durch eine Matrixkamera neben den inneren Spannungen zusätzlich eine Verformung angezeigt werden. Im Falle einer Änderung der Polarisation durch die von der inneren Spannung verursachten Doppelbrechung bliebe dann der lichtempfindliche Empfänger zumindest in diesem Bereich ganz oder teilweise dunkel.

In einer zweckmäßigen Ausgestaltung der Erfindung ist vorgesehen, daß aus dem Lichtstrahl vor dem Eintritt in wenigstens einen lichtempfindlichen Empfänger derjenige Wellenlängenbereich ausgefiltert wird, dessen Wellenlänge dem zirkular oder elliptisch polarisierten Wellenlängenbereich des gesendeten Lichts entspricht. Dadurch kann die Meßgenauigkeit und die Kontrastschärfe erhöht werden.

Zweckmäßig ist es, wenn der Lichtstrahl linienförmig den Gegenstand beleuchtet. Dabei kann wenigstens ein lichtempfindlicher Empfänger als Zeilenkamera ausgebildet ist. Es kann aber auch vorgesehen werden, daß wenigstens ein lichtempfindlicher Empfänger als Matrixkamera ausgebildet ist. Dadurch kann das Prüfverfahren einer CD vereinfacht werden, da die CD durch radial verlaufende Strahlen beleuchtet werden kann.

In einer weiteren Ausgestaltung der Erfindung ist vorgesehen, daß die Messungen über wenigstens eine vollständige Umdrehung des Gegenstandes erfolgen, wobei zumindest ein Teil der aufgenommenen Meßwerte in einer elektronischen Datenverarbeitungsanlage ausgewertet werden, um ein im wesentlichen vollständiges Bild des geprüften Gegenstandes zu erzeugen. Dadurch können die umfangreichen Messungen weiter vereinfacht und beschleunigt werden.

Ferner kann vorgesehen werden, daß die Prüfung des Gegenstandes in unterschiedlichen Bereichen des Gegenstandes mit unterschiedlichen Prüfschärfen erfolgt. Dadurch kann die Zeit für die Auswertung reduziert werden, da die Datenmenge unmittelbar von der Prüfschärfe abhängt und bei einer Verringerung der Prüfschärfe auch in nur dem einen oder anderem Bereich eine Reduzierung der Datenmenge und somit eine Reduzierung der Rechenzeit bewirkt.

Weiterhin kann es zweckmäßig sein, daß die unterschiedlichen Bereiche des Gegenstandes anhand der unterschiedlichen Grauwerte des aufgenommenen Lichtstrahls in diesen Bereichen identifiziert werden. Die Identifizierung der verschiedenen Bereiche kann in einfacher Weise durch die Datenverarbeitungsanlage erfolgen, so daß entsprechend einer Vorgabe die Prüfschärfen automatisch eingestellt werden können. Dabei kann so vorgegangen werden, daß die Prüfung des Gegenstandes innerhalb der identifizierten Bereiche mit unterschiedlichen Prüfschärfen erfolgt. Dadurch kann in vorteilhafter Weise die Rüstzeit der Prüfvorrichtung weiter herabgesetzt werden, da ein manuelles Einstellen der verschiedenen Bereiche entfällt. Insbesondere kann dadurch der sogenannte Pseudoausschuß verringert werden, da im Falle eines Fehlers außerhalb des Datenbereichs die Funktion der CD nach wie vor gegeben ist. Letztlich gehört zu einer vollständigen Klassifikation des Fehlers auch die Angabe, in welchem Bereich er aufgetreten ist.

Ferner kann es zweckmäßig sein, daß die Lage und die Abmaße der identifizierten Bereiche erfaßt werden. Die jeweilige Lage der Bereiche kann beispielsweise bei einer CD hinsichtlich einer eventuellen Exzentrizität ausgewertet werden. Die Abmessungen können beispielsweise als Maß für die Krümmung einer CD (Dishing) herangezogen werden. Hierbei kann es zweckmäßig sein, daß die Abmaße der Bereiche mit Sollwerten verglichen werden.

Die Vorrichtung zur vollständigen Qualitätskontrolle eines Gegenstandes, der wenigstens eine lichtdurchlässige Schicht aufweist und eine dahinter in Richtung auf die lichtdurchlässige Schicht hin verspiegelte Schicht aufweisen kann, insbesondere einer Compact-Disc (CD), ist mit einer Lichtquelle zur Erzeugung wenigstens eines Lichtstrahls, der in einem Einfallswinkel auf den Gegenstand fällt, und wenigstens einem ersten lichtempfindlichen Empfänger zur Aufnahme des reflektierten oder hindurchgehenden Lichtstrahls versehen. Gemäß der Erfindung wird vorgeschlagen, daß wenigstens ein Mittel vorgesehen ist, um den von dem Gegenstand kommenden Lichtstrahl vor dem Eintritt in den ersten lichtempfindlichen Empfänger aufzuteilen, und einen Teil in Richtung auf einen zweiten lichtempfindlichen Empfänger abzulenken. Dadurch können in einer Vorrichtung mit nur einer Lichtquelle gleichzeitig zwei lichtempfindliche Empfänger belichtet werden.

In einer Ausführungsform ist dabei vorgesehen, daß zwischen dem Gegenstand und dem ersten lichtempfindlichen Empfänger ein Strahlteiler angeordnet ist, und der zweite lichtempfindliche Empfänger in Ablenkungsrichtung des Strahlteilers angeordnet ist. Dies bedeutet, daß die von dem Strahlteiler ausgehenden Lichtstrahlen jeweils in Richtung auf einen lichtempfindlichen Empfänger verlaufen. Es kann aber insbesondere vorteilhaft sein, daß ein teildurchlässiger Spiegel vorgesehen ist, der so ausgerichtet ist, um den von dem Gegenstand reflektierten Lichtstrahl genau entgegengesetzt zu spiegeln, wobei zwischen der Lichtquelle und dem Gegenstand ein Strahlteiler vorgesehen ist, und der zweite lichtempfindliche Empfänger entsprechend der Ablenkungsrichtung des Strahlteilers angeordnet ist. Dadurch kann der Kontrast des Bildes, das von dem zweiten lichtempfindlichen Empfänger aufgenommen wird, wesentlich erhöht werden.

Besonders zweckmäßig kann es sein, wenn zwischen der Lichtquelle und dem Gegenstand wenigstens eine Polarisationseinrichtung angeordnet ist. Dabei ist es weiterhin vorteilhaft, vor wenigstens einem lichtempfindlichen Empfänger eine korrespondierende Polarisationseinrichtung anzuordnen. Durch die Polarisationseinrichtung vor dem lichtempfindlichen Empfänger kann derjeneige Anteil des von dem Gegenstand kommenden Lichtes herausgefiltert werden, dessen Polarisationsart der Polarisationsart des gesendeten Lichts entspricht. Dadurch können mittels einer Kamera innere Spannungen der CD erkannt werden.

Weiterhin kann es zweckmäßig sein, daß die Polarisationseinrichtung einen linearen Polfilter und eine Verzögerungsplatte, beispielsweise eine λ/4-Platte, aufweist, um wenigstens einen Wellenlängenbereich des Lichts zirkular oder elliptisch zu polarisierten. Dies bedeutet, daß zumindest eine Wellenlänge des ausgesendeten Lichts zirkular oder elliptisch polarisiert ist. Dadurch können zum einen die Fehler in der Mikrostruktur einer CD detektiert werden. Zum andern können, sofern eine entsprechende Polarisationseinrichtung in umgekehrter Einbaurichtung vor einem lichtempfindlichen Empfänger vorgesehen ist, die demnach in Strahlrichtung eine Verzögerungsplatte und einen linearen Polfilter aufweist, um die entsprechende Polarisationsart auszufiltern, die inneren Spannungen unabhängig von der Vorzugsrichtungen der verursachten Doppelbrechung angezeigt werden. Die Verzögerungsplatte` z. B. eine λ/4-Platte, vor dem lichtempfindlichen Empfänger weist dabei die gleiche Wellenlänge wie die Verzögerungsplatte, z. B. eine λ/4-Platte, hinter der Lichtquelle auf. Ferner ist es vorteilhaft, daß in Strahlrichtung vor der Polarisationseinrichtung vor der Kamera, also vor der Verzögerungsplatte, ein Farbfilter angeordnet ist, dessen Wellenlängenbereich dem Wellenlängenbereich des zirkular oder elliptisch polarisierten Lichts entspricht.

Die entsprechend ausgebildeten Polarisationseinrichtung können dabei so ausgerichtet sein, daß ein Lichtdurchgang bei einem im wesentlichen fehlerfreien Gegenstand, also beispeilsweise bei einer CD ohne innere Spannungen, erfolgt. Dadurch kann das auf dem lichtempfindlichen Empfänger erzeugte Bild für weitere Auswertungen herangezogen werden.

Zweckmäßig kann es sein, daß die entsprechende Polarisationseinrichtung hinter dem Strahlteiler oder dem teildurchlässigen Spiegel angeordnet ist. Damit wird erreicht, daß nur vor einem lichtempfindlichen Empfänger für nur einen Teil des Lichtstrahls eine korrespondierende Polarisationseinrichtung angeordnet ist. Der andere Teil des Lichtstrahls belichtet den anderen lichtempfindlichen Empfänger ohne Ausfilterung, so daß beispielsweise die Fehler der erstgenannten Fehlergruppe ohne eventuelle Beeinflussung durch die Sichtbarmachung der inneren Spannungen angezeigt werden können. Besonders zweckmäßig kann es dann sein, wenn der teildurchlässige Spiegel als Interferenzfilter ausgebildet ist, dessen Wellenlänge der Wellenlänge des zirkular polarisierten Lichts entspricht. Dadurch kann zum einen der Farbfilter entfallen und zum anderen wird der restliche Anteil des Lichts reflektiert und belichtet den zweiten lichtempfindlichen Empfänger noch mit einer ausreichenden Lichtstärke.

In einer zweckmäßigen Ausführungsform der Erfindung ist vorgesehen, daß die Lichtquelle einen linienförmigen Lichtstrahl erzeugt. Dabei kann vorgesehen werden, daß wenigstens ein lichtempfindlicher Empfänger eine Zeilenkamera ist. Vorteilhaft kann es auch sein, wenn wenigstens ein lichtempfindlicher Empfänger eine Matrixkamera ist. Mit einer Matrixkamera können die möglichen Verformungen einer CD gut sichtbar gemacht werden. Durch eine Verformung wird eine linienförmige Beleuchtung der CD auf der Matrixkamera, die einen flächigen Empfänger hat, als entsprechend gekrümmte Linie angezeigt. Es ist daher auch möglich, daß hut- oder wulstförmige Verformungen der CD erkannt werden können. Es kann selbstverständlich auch vorgesehen werden, daß ein lichtempfindlicher Empfänger eine Zeilenkamera ist, während der andere lichtempfindliche Empfänger als Matrixkamera ausgebildet ist.

Zweckmäßig kann es insbesondere sein, wenn der erste lichtempfindliche Empfänger hinter dem teildurchlässigen Spiegel als Matrixkamera und der zweite lichtempfindliche Empfänger als Zeilenkamera ausgebildet ist.

Grundsätzlich ist es dabei zweckmäßig, daß vor der Matrixkamera die entsprechende Polarisationseinrichtung angeordnet ist. Bei dieser Anordnung ist es möglich, daß in der Matrixkamera die inneren Spannungen und die Verformungen angezeigt werden, während die Zeilenkamera die anderen Fehler einschließlich der Wolken wiedergibt. Insbesondere bei der Ausführungsform, bei welcher der Strahlteiler zwischen der CD und der Lichtquelle angeordnet ist, ergibt sich dann zusätzlich noch ein erhöhter Kontrast bei der Darstellung der erstgenannten Fehler durch den zweiten lichtempfindlichen Empfänger.

Um das Prüfverfahren zu beschleunigen und zu automatisieren kann vorgesehen werden, daß wenigstens ein lichtempfindlicher Empfänger mit einer Datenverarbeitungsanlage in Verbindung steht. Dadurch kann beispielsweise ein vollständiges Bild der untersuchten CD mit allen detektierten Fehler auf einem Monitor angezeigt werden.

Die Erfindung wird im folgenden anhand der schematischen Zeichnung näher erläutert. Es zeigen:
- Fig. 1: eine Draufsicht auf eine Compact-Disc,
- Fig. 2: einen Querschnitt einer Compact-Disc entlang der Linie II-II in Fig. 1,
- Fig. 3: in schematischer Darstellungsform die möglichen Fehler in einer Compact-Disc,
- Fig. 4: eine Draufsicht auf eine mit dem Lichtstrahl beleuchtete CD,
- Fig. 5: in schematischer Darstellungsform den Lichtstrahlverlauf bei der Prüfung einer verformten CD,
- Fig. 6: eine Vorrichtung gemäß der Erfindung und
- Fig. 7: eine andere Ausführungsform einer Vorrichtung gemäß der Erfindung.

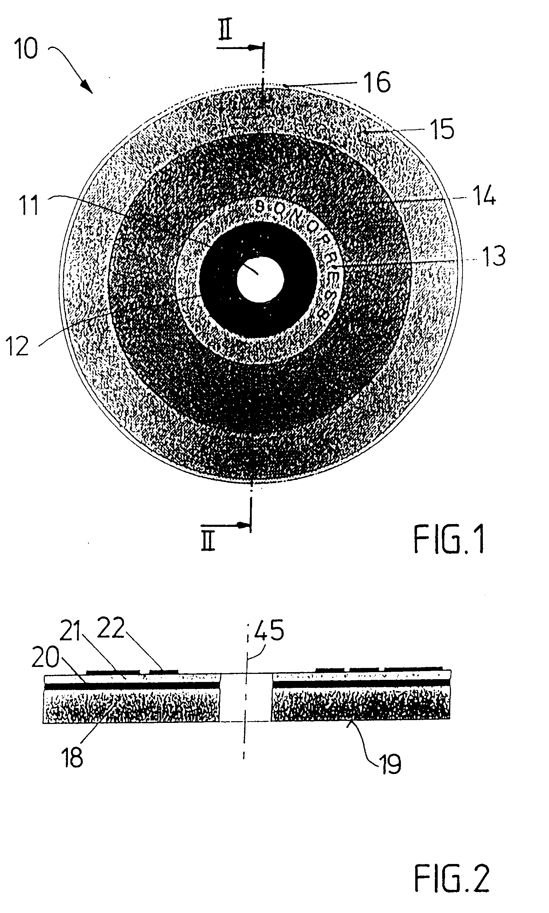

In den Fig. 1 und 2 ist schematisch der Aufbau einer CD 10 dargestellt. Wie in Fig. 1 ersichtlich, weist die CD 10 in radialer Richtung unterschiedliche Bereiche auf. Von innen nach außen sind zunächst das Kernloch 11 für die Zentrierung in dem Abspielgerät und der innere Randbereich 12 für das Verspannen mit der Abspielvorrichtung vorhanden. Daran schließt sich ein Bereich 13 für die Aufnahme des Ident-Codes an, der von dem eigentlichen Datenbereich 14 umgeben wird. Je nach Füllungsgrad mit Informationen kann sich an den Datenbereich 14 ein Lead-Out 15 oder unmittelbar der äußere Randbereich 16 anschließen.

In axialer Richtung (Fig. 2) weist die CD 10 von unten nach oben gesehen eine lichtdurchlässige Polycarbonatschicht 18 auf, die auf der der Unterseite 19 abgewandten Seite mit einer Metallschicht 20 versehen ist. Dadurch entsteht eine spiegelnde Oberfläche, so daß die innerhalb der Polycarbonatschicht in Form von Vertiefungen (nicht dargestellt) gespeicherten Daten von der Unterseite 19 her in dem Abspielgerät durch optische Mittel abgetastet werden können. Die Metallschicht 20 ist auf ihrer der Polycarbonatschicht 18 abgewandten Seite mit einer Lackschicht 21 versiegelt, auf welcher eine Farbschicht 22 als Label aufgedruckt sein kann.

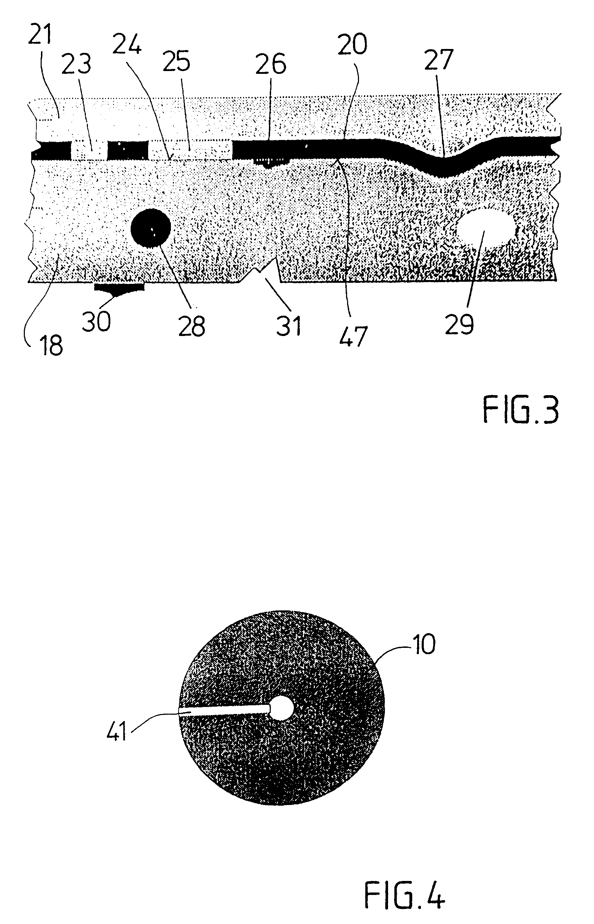

In Fig. 3 sind die möglichen Fehler dargestellt, die bei der Herstellung einer CD auftreten und durch übliche Meßmethoden sichtbar gemacht werden können. Mit dem Bezugszeichen 23 sind sogenannte Pinholes dargestellt, die durch Staubkörner auf der Oberfläche 24 des Rohlings der Polycarbonatschicht liegen und sich beim Zentrifugieren während des Sputtervorganges von der Oberfläche lösen und dabei ein Stück der metallischen Schicht 20 mitreißen. Die sogenannten Alukratzer 25 entstehen auf die gleiche Weise, jedoch wandert das Staubkorn zunächst noch auf der Oberfläche 24 weiter nach außen. Die Ölflecke 26 sind organische Rückstände auf der Oberfläche 24 der Polycarbonatschicht 18 der CD 10. Ein sogenannter Pickel 27 entsteht durch eine Verformung des Polycarbonatrohlings 18. Ferner können noch schwarze Punkte 28 durch Fremdkörpereinschlüsse oder Bläschen 29 durch Gaseinschlüsse innerhalb der Polycarbonatschicht 18 vorhanden sein. Auf der Unterseite 19 der Polycarbonatschicht treten als Fehler Lackspritzer 30 oder Kratzer 31 durch äußere mechanische Einwirkungen auf.

Diese Fehler bewirken einen verminderten Lichtdurchgang des Prüflichtstrahls, so daß bei der bildlichen Darstellung an den betreffenden Stellen schwarze oder dunklere Bereiche sichtbar werden. Die anderen Fehler, die oben beschrieben worden sind, können zeichnerisch nicht ohne weiteres dargestellt werden. Dennoch bewirken sie teilweise eine schwächere Belichtung des lichtempfindlichen Empfängers oder eine Ablenkung des Prüflichtstrahls.

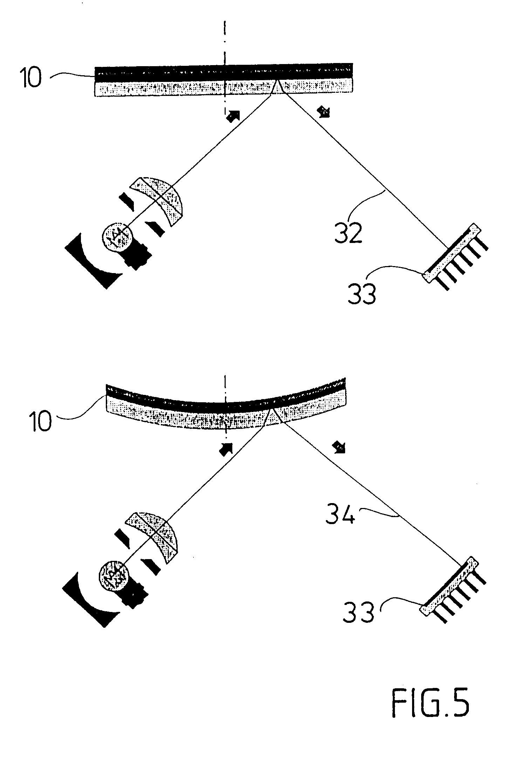

In Fig. 5 ist schematisch der Lichtstrahlverlauf bei der Prüfung einer CD auf Verformungen gezeigt. Aus dem oberen Bild der Fig. 5 ist ersichtlich, daß der von der CD 10 reflektierte Lichtstrahl 32 bei einer ebenen CD 10 mittig auf den positionsempfindlichen lichtempfindlichen Empfänger 33 trifft. Aus dem unteren Bild geht hervor, daß bei einer mit der Mitte nach unten gewölbten CD 10 der von der CD reflektierte Lichtstrahl 34 weiter oben auf den lichtempfindlichen Empfänger trifft. Bei einer entgegengesetzt verformten CD 10 würde der reflektierte Lichtstrahl weiter unten auf den lichtempfindlichen Empfänger 33 auftreffen.

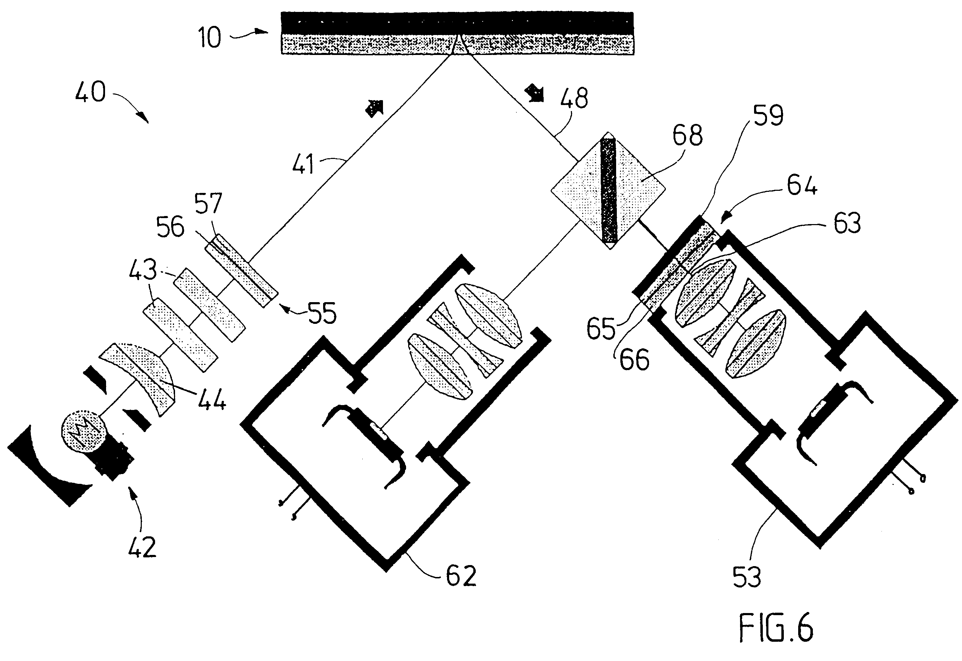

In der Fig. 6 ist eine Vorrichtung 40 zur Qualitätskontrolle von CD's 10 schematisch dargestellt. Die Zeichnung beschränkt sich auf die Darstellung des Strahlenverlaufs des Lichtstrahls 41, da dem Fachmann aus dieser Darstellung der erforderliche Aufbau mit den einzuhaltenden Winkeln und dergleichen ohne weiteres bekannt ist.

Die Vorrichtung 40 weist eine Lichtquelle 42 auf, die beispielsweise als herkömmliche Halogenleuchte ausgebildet sein kann. Durch die Anordnung verschiedener, allgemein bekannter Blenden und Linsen 43, 44 kann ein in bezug auf die Oberfläche der CD 10 linienförmiger Lichtstrahl 41 erzeugt werden, der auf die Unterseite 19, die Leseseite, der CD 10 in Form eines radial von der Mittelachse 45 ausgehenden Strahles auftrifft. Die CD dreht sich während der Prüfung um diese Mittelachse 45. Die linienförmige Beleuchtung der CD 10 ist in Fig. 4 dargestellt. Es ist natürlich auch möglich, daß sich der Lichtstrahl über den gesamten Durchmesser der CD 10 erstreckt. In diesem Fall wäre für eine vollständige Prüfung der CD 10 nur eine halbe Umdrehung derselben erforderlich.

Der von der Lichtquelle 42 erzeugte Lichtstrahl 41 trifft auf die Unterseite 19 der lichtdurchlässigen Schicht 18, der Polycarbonatschicht, der CD 10 und wird dort nach den optischen Eigenschaften dieser Schicht gebrochen. Der Einfallswinkel α ist so gewählt, daß keine Totalreflexion an der Unterseite 19 der Polycarbonatschicht 18 auftritt und kann beispielsweise zwischen 30° und 60° liegen. Es ist aber auch ein Einfallswinkel von 90° grundsätzlich möglich, jedoch wird ein spitzer Einfallswinkel α bevorzugt. An der durch die metallische Schicht 20 gebildeten verspiegelten Oberfläche 47 wird der Lichtstrahl 41 reflektiert und tritt nach entsprechender Brechung unter dem gleichen Ausfallswinkel β wieder aus der Polycarbonatschicht 18 hinaus.

Im weiteren Verlauf des reflektierten Lichtstrahls 48 ist ein erster lichtempfindlicher Empfänger 53 angeordnet. Je nach Ausführungsform und Art der zu detektierenden Fehler kann der lichtempfindliche Empfänger als Zeilen- oder Matrixkamera ausgebildet sein.

Vor dem lichtempfindlichen Empfänger 53 ist ein Strahlteiler 68 angeordnet, der den von der verspiegelten Oberfläche 47 der CD 10 reflektierten Lichtstrahl 48 in Richtung auf den zweiten lichtempfindlichen Empfänger 62 ablenkt. Bei diesem Ausführungsbeispiel ist vor der Lichtquelle 42 eine Polarisationseinrichtung 55 angeordnet, die einen linearen Polfilter 56 und eine Verzögerungsplatte 57, beispielsweise eine λ/4-Platte, aufweist, um zirkular oder elliptisch polarisiertes Licht in wenigstens einem Wellenlängenbereich zu erzeugen. Vor dem ersten lichtempfindlichen Empfänger 53 ist eine entsprechende Polarisationseinrichtung 64 in umgekehrter Einbaulage angeordnet, die in Strahlrichtung eine Verzögerungsplatte 65, beispielsweise eine λ/4-Platte, und einen linearen Polfilter 66 aufweist. Dadurch können auf diesem lichtempfindlichen Empfänger 53 innere Spannungen unabhängig von der Vorzugsrichtungen der verursachten Doppelbrechung sichtbar gemacht werden. Ferner ist in Strahlrichtung vor der Verzögerungsplatte 65 noch ein Farbfilter 59 angeordnet, um eine kontrastreichere Darstellung und eine erhöhte Meßgenauigkeit zu erzielen.

Vor dem zweiten lichtempfindlichen Empfänger 62, beispielsweise einer Zeilenkamera, ist keine derartige Polarisationseinrichtung vorgesehen, so daß dort neben den Fehlern der erstgenannten Fehlergruppe auch die sogenannten Wolken sichtbar werden.

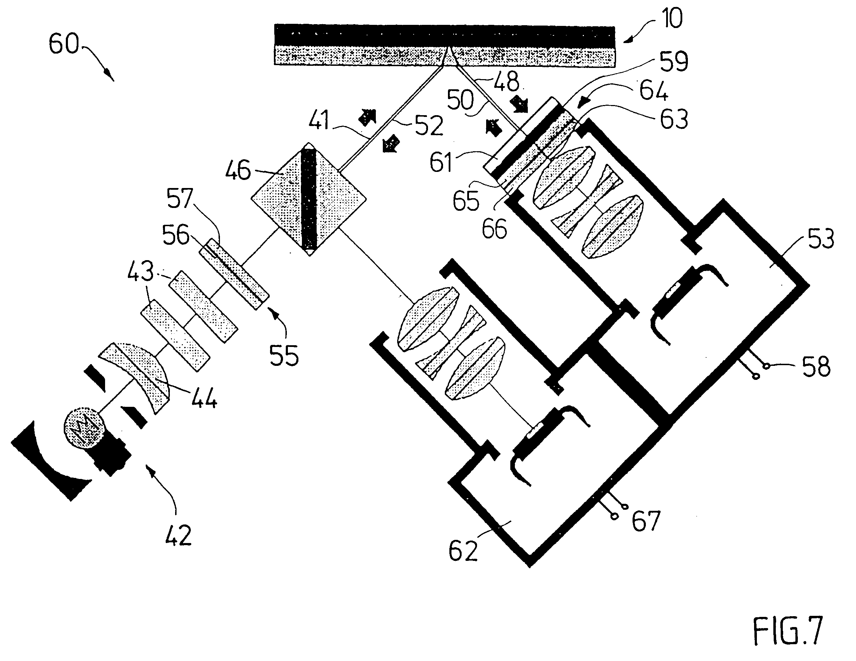

In Fig. 7 ist eine weitergehende Ausführungsform der Erfindung dargestellt, die zumindest teilweise dem Ausführungsbeispiel gemäß Fig. 6 entspricht. Es werden daher gleiche Teile oder Elemente mit gleichen Bezugszeichen versehen.

Bei der in Fig. 7 gezeigten Vorrichtung 60 ist vor dem lichtempfindlichen Empfänger 53 ein teildurchlässiger Spiegel 61 angeordnet. Bei dieser Anordnung wird der von dem teildurchlässigen Spiegel 61 reflektierte Lichtstrahl 50 genau entgegengesetzt reflektiert, so daß ein zu dem reflektierten Lichtstrahl 48 entgegengesetzt verlaufender Lichtstrahl 50 gebildet wird. Um Mißverständnissen vorzubeugen, wird darauf hingewiesen, daß lediglich zur Verdeutlichung der unterschiedlichen Lichtstrahlen diese nebeneinander gezeichnet sind. Bei korrekt eingestellter Optik und unverformter CD 10 verlaufen die Lichtstrahlen zumindest näherungsweise übereinander.

Dieser Lichtstrahl 50 trifft mit dem gleichen Winkel wie der Einfallswinkel α (und somit dem Ausfallswinkel β) auf die Unterseite 19 der CD 10 und wird wiederum entsprechend den optischen Eigenschaften der lichtdurchlässigen Schicht 18 gebrochen und an der verspiegelten Oberfläche 47 an näherungsweise demselben Punkt 51, an dem bereits der einfallende Lichtstrahl 41 gespiegelt worden ist, ebenfalls reflektiert. Der austretende Lichtstrahl 52 trifft auf einen Strahlteiler 46, der zwischen der CD 10 und der Lichtquelle angeordnet ist. Dort erfährt der Lichtstrahl eine Ablenkung, beispielsweise um 90°. Der Strahlteiler 46 ist dabei so ausgebildet, daß der ein Teil des originären, unmittelbar von der Lichtquelle 42 ausgehenden Lichtstrahls 41 nicht abgelenkt wird. In Ablenkungsrichtung hinter dem Strahlteiler 46 ist der zweite lichtempfindliche Empfänger 62 angeordnet.

Bei diesem Ausführungsbeispiel ist vor der Lichtquelle 42 eine Polarisationseinrichtung 55 angeordnet, die einen linearen Polfilter 56 und eine Verzögerungsplatte 57 aufweist, um zirkular polarisiertes Licht in zumindest einem Wellenlängenbereich zu erzeugen. Vor dem lichtempfindlichen Empfänger 53 ist eine entsprechende, in umgekehrter Einbaulage eingebaute Polarisationseinrichtung 64 angeordnet, die in Strahlrichtung eine Verzögerungsplatte 65 und einen linearen Polfilter 66 aufweist. Ferner ist in Strahlrichtung vor der Verzögerungsplatte 65 noch ein Farbfilter 59 vorgesehen, dessen Wellenlänge der Wellenlänge des zirkular polarisierten Lichts entspricht. Es kann auch vorgesehen sein, daß der teildurchlässige Spiegel als Interferenzfilter ausgebildet ist, dessen Wellenlänge der Wellenlänge des zirkular polarisierten Lichts entspricht. In diesem Fall ist der Farbfilter 59 nicht mehr erforderlich.

Aufgrund der Anordnung gemäß Fig. 7 wird die CD 10 in einer Meßlage, d. h. , daß die CD 10 keine weitere Drehung durchführt, zweimal von dem Lichtstrahl bis zu dessen Auftreffen auf den lichtempfindlichen Empfänger 62 durchlaufen, nämlich einmal von dem originären Lichtstrahl 41 und zum zweiten Mal von dem an dem teildurchlässigen Spiegel 61 reflektierten Lichtstrahl 50. Es ist offensichtlich, daß dadurch auch kontrastärmere Fehler sichtbar gemacht werden können, da derselbe Lichtstrahl zweimal durch den Fehler abgeschwächt wird, wodurch der Kontrast im Vergleich zu den daneben verlaufenden ungestörten Strahlen erhöht wird.

Es können bei der Ausführungsform gemäß Fig. 7 natürlich auch die beiden Kameras miteinander vertauscht werden. Falls jedoch beispielsweise die Polarisationseinrichtung 64 vor dem zweiten lichtempfindlichen Empfänger angeordnet wäre, würde der Vorteil des höheren Kontrastes, der für die Detektion der Fehler der ersten obengenannten Fehlergruppe zweckmäßig ist, wegfallen, da der die entsprechende Kamera hinter dem teildurchlässigen Spiegel belichtende Lichtstrahl die entsprechende Stelle auf der CD nur einmal passiert hat.

Die Videoausgänge 58, 67 der lichtempfindlichen Empfänger 53, 62 sind mit einer Datenverarbeitungsanlage verbunden, durch welche die empfangenen Meßwerte beispielsweise auf einem Bildschirm bildlich dargestellt werden. Es ist offensichtlich, daß durch diese Ausführungsformen durch die Verwendung von zwei Kameras in nur einer Vorrichtung mehrere Fehler einer CD zuverlässig angezeigt werden können, wofür bislang mehrere Vorrichtungen zum Prüfen einer CD erforderlich waren.

Da der Lichtstrahl 41 bei den obengenannten Ausführungsformen durch den Strahlteiler 46, 68 und durch den teildurchlässigen Spiegel 61 aufgeteilt wird, ist es zweckmäßig, eine stärkere Lichtquelle 42 vorzusehen.

Es kann bei beiden gezeigten Ausführungsformen gemäß den Fig. 5 und 6 auch vorgesehen werden, daß der Strahlteiler 46, 68 als Polarisationsstrahlteiler ausgebildet ist. Für die Erzeugung von zirkular polarisiertem Licht in zumindest einem Wellenlängenbereich wäre dann die λ/4-Platte 57 hinter dem Strahlteiler 46 anzuordnen. Damit wäre zwar vor beiden lichtempfindlichen Empfängern eine Polarisationseinrichtung vorhanden. Die Einflüsse des Polarisationsstrahlteilers 46, 68 auf die bildlichen Darstellungen könnten jedoch in der anschließenden Auswertung berücksichtigt werden.

Ferner kann es zweckmäßig sein, daß in der Lichtquelle 42 bereits linear polarisiertes Licht erzeugt wird, beispielsweise durch die Verwendung eines Lasers. In diesem Fall würde Verzögerungsplatte, beispielsweise eine λ/4-Platte, zur Erzeugung von zirkular oder elliptisch polarisiertem Licht in zumindest einem Wellenlängenbereich ausreichen.

Grundsätzlich können die inneren Spannungen durch jede Art von polarisiertem Licht kenntlich gemacht werden. Um eine vielseitige Anwendung des Prüfverfahrens zu ermöglichen, ist vorgesehen, daß die verwendeten Polfilter vor der Lichtquelle einerseits und vor einem der lichtempfindlichen Empfänger andererseits so ausgerichtet sind, daß ein Lichtdurchgang, vorzugsweise der maximale Lichtdurchgang, bei einem einwandfreien zu prüfenden Gegenstand erfolgt, so daß in dem betreffenden lichtempfindlichen Empfänger neben der Doppelbrechung noch andere Fehlerphänomene beobachtet werden können. In Abhängigkeit von der Bedeutung eventueller Fehler des Gegenstandes kann beispielsweise die Zeilenkamera oder auch die Matrixkamera mit der korrespondierenden Polarisationseinrichtung versehen sein.

Vorstehend wurde überwiegend von der Verwendung von linear oder zirkular polarisiertem Licht gesprochen. Es ist natürlich auch möglich, daß durch eine entsprechende Ausrichtung (Verdrehung) des linearen Polfilters und der Verzögerungsplatte (z. B. eine λ/4-Platte) vor der Lichtquelle zueinander elliptisch polarisiertes Licht erzeugt wird. Dies hat außerdem den Vorteil, daß die durch die metallische Spiegelschicht erzeugte Veränderung der Polarisationsrichtung kompensiert werden kann. Die Veränderung der Polarisationsrichtung durch die metallische Spiegelschicht sind physikalisch bekannte Vorgänge, so daß der erforderliche Winkel zwischen linearem Polfilter einerseits und Verzögerungsplatte andererseits ohne weiteres ermittelbar ist. Die Verdrehung um einen von 45° abweichenden Winkel wird dabei so gewählt, daß eventuelle Doppelbrechungen unabhängig von der Vorzugsrichtung angezeigt werden können. Die Ausrichtung (Verdrehung) der Verzögerungsplatte und des linearen Polfilters vor dem lichtempfindlichen Empfänger erfolgt dann in entsprechender Weise. Auch hier ist es dann zweckmäßig, wenn die jeweiligen Polarisationseinrichtungen so ausgerichtet sind, daß ein Lichtdurchgang bei einer hinsichtlich der durch die inneren Spannungen bewirkten Doppelbrechung einwandfreien CD erfolgt.

In der Zeichnung sind als Ausführungsbeispiele nur Vorrichtungen dargestellt, bei welchen der Lichtstrahl an der verspiegelten Schicht reflektiert wird. Es ist natürlich auch ein Aufbau möglich, bei welchem der Lichtstrahl durch den durchsichtigen Rohling hindurchtritt. In diesem Fall wären die entsprechenden lichtempfindlichen Empfänger und die optischen Mittel zur Strahlaufteilung auf der der Lichtquelle gegenüberliegenden Seite der CD anzuordnen.

### Bezugszeichenliste:

- 10: Compact-Disc (CD)
- 11: Kernloch
- 12: innerer Randbereich
- 13: Ident-Code-Bereich
- 14: Datenbereich
- 15: Lead-Out
- 16: äußerer Randbereich
- 18: lichtdurchlässige Schicht
- 19: Unterseite
- 20: Metallschicht
- 21: Lackschicht
- 22: Farbschicht
- 23: Pinhole
- 24: Oberfläche
- 25: Alukratzer
- 26: Ölfleck
- 27: Pickel
- 28: Schwarzer Punkt
- 29: Bläschen
- 30: Lackspritzer
- 31: Kratzer
- 32: Lichtstrahl
- 33: lichtempfindlicher Empfänger
- 34: Lichtstrahl
- 40: Vorrichtung
- 41: Lichtstrahl
- 42: Lichtquelle
- 43: Blenden
- 44: Linsensystem
- 45: Mittelachse
- 46: Strahlteiler
- 47: verspiegelte Oberfläche
- 48: ausfallender Lichtstrahl
- 49: Spiegelelement
- 50: reflektierter Lichtstrahl
- 51: Spiegelpunkt
- 52: ausfallender Lichtstrahl
- 53: erster lichtempfindlicher Empfänger
- 55: Polarisationseinrichtung
- 56: linearer Polfilter
- 57: Verzögerungsplatte
- 58: Videoausgang
- 59: Farbfilter
- 60: Vorrichtung
- 61: teildurchlässiger Spiegel
- 62: zweiter lichtempfindlicher Empfänger
- 63: Lichtstrahl
- 64: Polarisationseinrichtung
- 65: Verzögerungsplatte
- 66: linearer Polfilter
- 67: Videoausgang
- 68: Strahlteiler
- 70: Vorrichtung
- α: Einfallswinkel
- β: Ausfallswinkel

## Patentansprüche

1. Verfahren zur Qualitätskontrolle eines Gegenstandes (10), der wenigstens eine lichtdurchlässige Schicht (18) aufweist, insbesondere einer Compact-Disc (CD), bei welchem Verfahren wenigstens ein Lichtstrahl (41) einer Lichtquelle (42) in einem Einfallswinkel (α) auf den Gegenstand (10) aufgebracht und der reflektierte oder hinduchgehende Strahl von einem ersten lichtempfindlichen Empfänger (53) aufgenommen wird, dadurch gekennzeichnet, daß der von dem Gegenstand kommende Lichtstrahl (48) vor dem Eintritt in den ersten lichtempfindlichen Empfänger (53) aufgeteilt wird, und ein Teil des Lichtstrahls in Richtung auf einen zweiten lichtempfindlichen Empfänger (62) abgelenkt wird.

2. Verfahren nach Anspruch 1, dadurch gekennzeichnet, daß ein Teil des von dem Gegenstand kommenden Lichtstrahls (48) durch einen Strahlteiler (68), der zwischen dem ersten lichtempfindlichen Empfänger (53) und dem Gegenstand (10) angeordnet ist, in Richtung auf den zweiten lichtempfindlichen Empfänger (62) abgelenkt wird.

3. Verfahren nach Anspruch 1, dadurch gekennzeichnet, daß der von dem Gegenstand (10) kommende Lichtstrahl (48) von einem teildurchlässigen Spiegel (61) so reflektiert wird, daß der dort reflektierte Lichtstrahl (50) gegenläufig unter einem im wesentlichen gleichen Winkel (β) wie der Einfallswinkel (α) auf den Gegenstand (10) auftrifft, dort reflektiert wird und durch einen zwischen dem Gegenstand (10) und der Lichtquelle (42) angeordneten Strahlteiler (46) trifft, in welchem ein Teil des Lichtstrahls in Richtung auf den zweiten lichtempfindlichen Empfänger (62) abgelenkt wird.

4. Verfahren nach einem der Ansprüche 1 bis 3, dadurch gekennzeichnet, daß der Lichtstrahl (41) hinter der Lichtquelle (42) durch eine Polarisationseinrichtung linear polarisiert wird.

5. Verfahren nach einem der Ansprüche 1 bis 3, dadurch gekennzeichnet, daß zumindest ein Wellenlängenbereich des Lichtstrahls (41) hinter der Lichtquelle (42) durch eine Polarisationseinrichtung (64) elliptisch polarisiert wird.

6. Verfahren nach Anspruch 5, dadurch gekennzeichnet, daß die elliptische Polarisierung so gewählt wird, daß die durch die verspiegelte Schicht bewirkte Veränderung der Polarisierung kompensiert wird.

7. Verfahren nach einem der Ansprüche 1 bis 6, dadurch gekennzeichnet, daß zumindest ein Wellenlängenbereich des Lichtstrahls (41) hinter der Lichtquelle (42) durch eine Polarisationseinrichtung (64) zirkular polarisiert wird.

8. Verfahren nach einem der Ansprüche 1 bis 7, dadurch gekennzeichnet, daß der Lichtstrahl vor dem Eintritt in wenigstens einen lichtempfindlichen Empfänger wenigstens eine korrespondierende Polarisationseinrichtung durchläuft.

9. Verfahren nach einem der Ansprüche 1 bis 8, dadurch gekennzeichnet, daß die Polarisationseinrichtung vor dem wenigstens einen lichtempfindlichen Empfänger so ausgerichtet ist, daß ein Lichtdurchgang bei einem im wesentlichen fehlerfreien Gegenstand erfolgt.

10. Verfahren nach einem der Ansprüche 1 bis 9, dadurch gekennzeichnet, daß aus dem Lichtstrahl vor Ausfilterung des Anteils, dessen Polarisationsart der Polarisationsart des gesendeten Lichtes entspricht, derjenige Wellenlängenbereich ausgefiltert wird, dessen Wellenlänge dem elliptisch polarisierten Wellenlängenbereich des gesendeten Lichtes entspricht.

11. Verfahren nach einem der Ansprüche 1 bis 10, dadurch gekennzeichnet, daß aus dem Lichtstrahl vor Ausfilterung des Anteils, dessen Polarisationsart der Polarisationsart des gesendeten Lichtes entspricht, derjenige Wellenlängenbereich ausgefiltert wird, dessen Wellenlänge dem zirkular polarisierten Wellenlängenbereich des gesendeten Lichtes entspricht.

12. Vorrichtung (40, 60) zur Qualitätskontrolle eines Gegenstandes (10), der wenigstens eine lichtdurchlässige Schicht (18) aufweist, insbesondere einer Compact-Disc (CD), mit einer Lichtquelle (42) zur Erzeugung wenigstens eines Lichtstrahls (41), der in einem Einfallswinkel (α) auf den Gegenstand (10) fällt, und wenigstens einem ersten lichtempfindlichen Empfänger (53) zur Aufnahme des reflektierten oder hindurchgehenden Lichtstrahls, dadurch gekennzeichnet, daß wenigstens ein Mittel vorgesehen ist, um den von dem Gegenstand (10) kommenden Lichtstrahl (48) vor dem Eintritt in den ersten lichtempfindlichen Empfänger (53) aufzuteilen und einen Teil in Richtung auf einen zweiten lichtempfindlichen Empfänger (62) abzulenken.

13. Vorrichtung nach Anspruch 12, dadurch gekennzeichnet, daß das Mittel zum Aufteilen des Lichtstrahls einen Strahlteiler (68) aufweist, der zwischen dem Gegenstand (10) und dem ersten lichtempfindlichen Empfänger (53) angeordnet ist.

14. Vorrichtung nach Anspruch 12, dadurch gekennzeichnet, daß das Mittel zum Aufteilen des Lichtstrahls einen Strahlteiler (46) aufweist, der zwischen dem Gegenstand (10) und der Lichtquelle (42) angeordnet ist, wobei vor dem ersten lichtempfindlichen Empfänger (53) ein teildurchlässiger Spiegel (61) angeordnet ist, der so ausgerichtet ist, um den Lichtstrahl entgegengesetzt in Richtung auf den Gegenstand (10) zu reflektieren.

15. Vorrichtung nach einem der Ansprüche 12 bis 14, dadurch gekennzeichnet, daß zwischen der Lichtquelle (42) und dem Gegenstand (10) wenigstens eine Polarisationseinrichtung (55) angeordnet ist.

16. Vorrichtung nach einem der Ansprüche 12 bis 15, dadurch gekennzeichnet, daß der Strahlteiler (46, 68) als Polarisationsstrahlteiler ausgebildet ist.

17. Vorrichtung nach einem der Ansprüche 12 bis 16, dadurch gekennzeichnet, daß die Polarisationseinrichtung einen linearen Polfilter (56) und eine Verzögerungsplatte (57) aufweist, um wenigstens einen Wellenlängenbereich des gesendeten Lichtes elliptisch zu polarisieren.

18. Vorrichtung nach einem der Ansprüche 12 bis 17, dadurch gekennzeichnet, daß die Polarisationseinrichtung einen linearen Polfilter (56) und eine λ/4-Platte (57) aufweist, um wenigstens einen Wellenlängenbereich des gesendeten Lichtes zirkular zu polarisieren.

19. Vorrichtung nach einem der Ansprüche 12 bis 18, dadurch gekennzeichnet, daß vor wenigstens einem lichtempfindlichen Empfänger eine korrespondierende Polarisationseinrichtung (64) angeordnet ist.

20. Vorrichtung nach einem der Ansprüche 12 bis 19, dadurch gekennzeichnet, daß die korrespondierende Polarisationseinrichtung (64) vor nur einem lichtempfindlichen Empfänger hinter dem Mittel (68) zur Strahlaufteilung beziehungsweise dem teildurchlässigen Spiegel (61) angeordnet ist.

21. Vorrichtung nach einem der Ansprüche 12 bis 20, dadurch gekennzeichnet, daß hinter der korrespondierenden Polarisationseinrichtung (64) eine Matrixkamera angeordnet ist.

22. Vorrichtung nach einem der Ansprüche 12 bis 21, dadurch gekennzeichnet, daß hinter der korrespondierenden Polarisationseinrichtung (64) eine Zeilenkamera angeordnet ist.

23. Vorrichtung nach einem der Ansprüche 12 bis 22, dadurch gekennzeichnet, daß die Polarisationseinrichtung (64) in Strahlrichtung eine Verzögerungsplatte (65) und einen linearen Polfilter (66) aufweist.

24. Vorrichtung nach einem der Ansprüche 12 bis 23, dadurch gekennzeichnet, daß die Polarisationseinrichtung so ausgerichtet ist, daß ein Lichtdurchgang bei einem im wesentlichen fehlerfreien Gegenstand erfolgt.

25. Vorrichtung nach einem der Ansprüche 12 bis 24, dadurch gekennzeichnet, daß vor der korrespondierenden Polarisationseinrichtung (64) ein Farbfilter (59) angeordnet ist, dessen Wellenlängenbereich dem Wellenlängenbereich des zirkular beziehungsweise des elliptisch polarisierten Lichts entspricht.

26. Vorrichtung nach einem der Ansprüche 12 bis 25, dadurch gekennzeichnet, daß der teildurchlässige Spiegel (61) als Interferenzfilter ausgebildet ist, dessen Wellenlängenbereich dem Wellenlängenbereich des zirkular oder elliptisch polarisierten Lichts entspricht, und hinter dem Interferenzfilter in Strahlrichtung eine Verzögerungsplatte (65) und ein lineares Polfilter (66) angeordnet ist.
